# EUROPEAN PATENT APPLICATION

(11) **EP 4 733 967 A1**
(43) Date of publication of application: **29.04.2026**
(21) Application number: 25203663.7
(22) Date of filing: 22.09.2025
(51) Int. Cl.: G06F 21/53, G06F 21/55, G06F 21/56, G06F 21/57

(54) **AN APPARATUS FOR ATTESTATION OF A RUNNING WORKLOAD IN A TRUSTED EXECUTION ENVIRONMENT, A METHOD FOR ATTESTATION OF A RUNNING WORKLOAD IN A TRUSTED EXECUTION ENVIRONMENT, AND A NON-TRANSITORY COMPUTER-READABLE MEDIUM**

(30) Priority: 23.10.2024 US 202418923764
(71) Applicant: INTEL Corporation, Santa Clara, CA 95054 (US)
(72) Inventor: BEN-SHALOM, Omer, 75503 Rishon Lezion (IL); BIRK, Eran, 34366 Haifa HA (IL); MORGAN, Dennis, Pine Grove, 95665 (US); SEDAYAO, Jeffrey, San Jose, 95131 (US)
(74) Representative: 2SPL Patentanwälte PartG mbB

(57) **Abstract**

It is provided an anon-transitory computer-readable medium storing instructions that, when executed by one or more processing circuitries, causing the one or more processing circuitries to perform a method for attestation of a running workload in a trusted execution environment. The method comprises generating a first measurement of a workload. The method further comprises capturing one or more snapshots of a trusted execution environment executing the workload. The one or more snapshots are captured based on one or more snapshot triggers. The method comprises generating a second measurement of the workload while the workload is being executed in the trusted execution environment. The method comprises verifying the generated second measurement. The method comprises triggering a verification failure action, if the verification of the second measurement fails.

## Description

### Background

Trusted Execution Environments (TEEs) are designed to provide a secure, isolated environment for running sensitive workloads, protecting them from unauthorized access and tampering. While TEEs offer a strong foundation for ensuring the confidentiality and integrity of code, traditional methods of attestation often focus on validating the workload only at the time of launch. This leaves the running workload potentially vulnerable to attacks or compromises that occur during its execution. As modern cyber threats evolve, there is an increasing need for ongoing monitoring and validation of workloads within TEEs, along with mechanisms for efficiently responding to any integrity breaches that may arise.

### Brief description of the Figures

Some examples of apparatuses and/or methods will be described in the following by way of example only, and with reference to the accompanying figures, in which
Fig. 1 illustrates a block diagram of an example of a non-transitory computer-readable medium;
Fig. 2 illustrates a block diagram of an example of an apparatus;
Fig. 3 illustrates a flowchart of an example of a method; and
Fig. 4 illustrates an example of a block diagram of a system for near-continuous attestation and management of a running workload in a TEE as described herein.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

In the following description, specific details are set forth, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply element item so described must be in a given sequence, either temporally or spatially, in ranking, or any other manner. "Connected" may indicate elements are in direct physical or electrical contact with each other and "coupled" may indicate elements co-operate or interact with each other, but they may or may not be in direct physical or electrical contact.

As used herein, the terms "operating", "executing", or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

Attestation systems, such as Intel^{®} Trust Authority, may only validate a workload in a TEE at launch, leaving no visibility into potential compromises that occur later in the TEE, such as with Intel^{®} TDX. This limitation may cause the TEE to conflict with existing security controls that monitor code execution and behavior, like Endpoint Detection and Response (EDR). Since the trusted code base in most TEEs (e.g., Intel^{®} TDX, AMD^{®} SEV) is built around full virtual machines with a large Trusted Code Base (TCB), the risk of exploits occurring during execution, particularly from input, can be significant.

In previous approaches to this problem, attestation systems such as Intel^{®} Trust Authority or the Secure Production Identity Framework for Everyone (SPIFFE) and SPIFFE Runtime Environment (SPIRE) validate a workload only at launch, assuming that this validation is sufficient. However, these techniques do not address malicious modifications to the workload that may occur during execution, such as those resulting from remote code execution (RCE) attacks, including return-oriented programming (ROP), buffer overflows, and use-after-free vulnerabilities. Other security tools, such as Endpoint Detection and Response (EDR) systems and sensors, may monitor workload behavior during runtime but often require integration into the virtual machine, which increases image complexity and impacts performance. Additionally, because these tools operate within the same execution environment, they are more susceptible to being compromised by the exploit. Moreover, they introduce an additional attack surface, as they require network communication with the virtual machine and are not inherently integrated with the TEE attestation and protection mechanism

The disclosed technique describes a system that utilizes periodic runtime validation checks on workloads running in TEEs to detect and respond to runtime code exploitation. This technique may be implemented and deployed locally, for example, on a TDX controller. Additionally, it may be integrated with or operate through services such as Intel^{®} Trust Authority, coarse-grained authorization systems like Microsoft Conditional Access, and workload identity authorization systems like SPIFFE/SPIRE. The proposed technique may include the following components: an endpoint runtime integrity monitor (which may be implemented as a micro-agent, a separate trusted partition, or other models as described below); a workload snapshot and checkpoint mechanism; and a policy enforcement engine that receives alerts and initiates actions if a runtime verification failure is detected. The system also supports rollback actions in the event of verification failure. For example, an orchestrator may roll back the workload to a previously known good state, leveraging a storage environment that holds snapshots (execution context/data at checkpoints) and triggers for creating checkpoints based on code events or other sources, such as time-based triggers. This technique enhances the monitoring of workloads running in TEEs, providing ongoing attestation beyond the initial loading phase

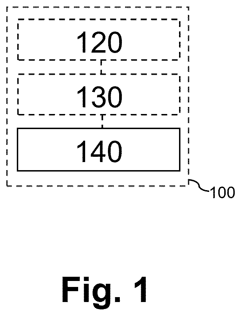

**Fig. 1** illustrates a block diagram of an example of a non-transitory computer-readable medium 140. The non-transitory computer-readable medium 140 stores instructions that, when executed by one or more processing circuitries 130, causes the one or more processing circuitries 130 to perform a method for attestation of a running workload in a trusted execution environment. The one or more processing circuitries 130 may access the non-transitory computer-readable medium 140 via an interface circuitry 120. In some examples, the non-transitory computer-readable medium 140 may be included in an apparatus 100, which may also comprise the one or more processing circuitries 130. In some examples, the one or more processing circuitries 130 may be distributed over a plurality of apparatuses and may for example, access the non-transitory computer-readable medium 140 via the interface circuitry 120.

For example, the non-transitory computer-readable medium may refer to any tangible, physical medium capable of storing instructions, data, or other types of information for access by a computer, processor, or similar electronic device. The computer-readable medium may be non-transitory in that medium may have a persistent or enduring form. The non-transitory computer-readable medium may comprise one or more of the following computer-readable mediums: magnetic storage devices, such as hard disk drives (HDDs) and magnetic tapes, which store data using magnetic patterns and are commonly used for long-term data storage in computers, servers, and backup systems. Optical storage media, including compact discs (CDs), digital versatile discs (DVDs), and Blu-ray discs, utilize laser technology to read and write data, offering durability and longevity for storing software, media, and backups. More modern forms include solid-state devices (SSD), which rely on flash memory technology without moving parts, such as USB flash drives, secure digital (SD) cards, and internal/external SSDs, valued for their fast read/write speeds and portability. Additionally, non-volatile memory chips like read-only memory (ROM) and programmable ROM (PROM) store critical firmware or embedded software, commonly found in embedded systems and computers. Advanced memory technologies, such as phase-change memory (PCM), magnetoresistive RAM (MRAM), and ferroelectric RAM (FeRAM), offer persistent data storage with high reliability, speed, and power efficiency, making them ideal for applications requiring rapid access and data retention, such as in mobile devices, high-performance computing, and industrial systems.

For example, the one or more processing circuitries 130 may access the non-transitory computer-readable medium 140 over the interface circuitry 120. For example, the one or more processing circuitries 130 may then execute the instructions stored on the non-transitory computer-readable medium 140. The execution of the instructions stored on the non-transitory computer-readable medium 140 causes the one or more processing circuitries 130 to the perform the method for attestation of a running workload in a trusted execution environment.

The method comprises generating a first measurement of a workload. The method further comprises capturing one or more snapshots of a trusted execution environment (TEE) executing the workload. The one or more snapshots are captured based on one or more snapshot triggers. The workload may refer to the set of tasks, processes, or applications running on a system, for example the apparatus 100, comprising the code, binaries, data, and configuration files necessary to execute a specific operation. The workload may comprise all the resources and instructions required to complete the computational tasks assigned to it. The workload is executed in the TEE.

For example, the TEE may be instantiated based on a TEE framework (the TEE may also be referred to as an instance of a TEE framework). For example, a host, such as the apparatus 100, may generate an instance of TEE. A TEE framework may comprise a combination of specialized hardware and software components designed to protect data and computations from unauthorized access and tampering within a computer system. The TEE framework may provide a secure processing circuitry such as the processing circuitry 130, which is responsible for executing sensitive workloads in an isolated environment. Additionally, the TEE framework may provide secure memory, such as a protected region of the computer system's RAM, where sensitive data can be stored during computation. To further safeguard this data, the TEE framework may provide memory encryption, ensuring that the contents of the system memory are protected even if physical access to the memory is obtained. For example, the TEE framework may support I/O isolation and secure input/output operations, preventing data leakage during communication between the processing circuitry and peripheral devices. In some examples, the TEE framework may provide secure storage capabilities of the computer system, such as a secure partition within the system's main storage, dedicated to storing cryptographic keys, sensitive configuration data. This secure storage ensures that critical data remains protected even when at rest. In some examples, the TEE framework may also comprise separate secure storage components, such as a tamper-resistant storage chip, like an integrity measurement register, to securely store measurements of the TEE and/or critical data associated with the TEE's operation. In some examples, the TEE may be TDX trusted domain (TD) based on the TDX framework. In some examples, the TEE may be an enclave based on the SGX framework. For example, workload may be executed in the TEE. That is the TEE uses its components to enable the secure and isolated execution of the workload. This may comprise computational activities that utilize the TEE's resources, including CPU, memory, and storage, to perform their operations. The TEE ensures that the workload is protected from unauthorized access and tampering by leveraging hardware-based security features and cryptographic measures, thereby maintaining the integrity and confidentiality of the data and processes throughout their execution.

A measurement of the workload may comprise calculating a cryptographic hash or checksum of the components included in the workload such as binaries, configuration files, data, and/or libraries. In some examples, if the measurement is taken during execution of the workload, it may further comprise a runtime state of the workload. The runtime state of the workload may comprise dynamic information generated during execution, such as memory contents, CPU registers, active processes or threads, current variable values, and/or the execution context such as the program counter and stack. The measurement serves as a digital fingerprint of the workload, ensuring that it has not been altered or tampered with.

For example, the first measurement may be taken during development of the workload. The first measurement may be conducted outside the TEE, before the workload is deployed to the TEE. The first measurement may be used to define a reference measurement (also referred to as a known good state, or golden image), which may serve as a comparison measurement for future integrity checks (for example for the second and/or third measurement, see below). The first measurement captures the unaltered and trusted state of the workload, ensuring that during runtime or deployment to the TEE, the current state of the workload can be compared against this baseline measurement to detect any tampering, unauthorized changes, or corruption.

The one or more snapshots of the TEE executing the workload may comprise the state of the TEE at one or more specific points in time, when the snapshots are captured. The one or more snapshots captured during the workload's execution, may be stored and used later for purposes such as restoration, rollback, or analysis (see below). In some examples, the one or more snapshots may comprise at least the workload and the current execution state of the workload within the trusted execution environment. For example, the one or more snapshots may comprise the binaries, the configuration files that define how the workload is being executed, and the runtime state of the workload, comprising the memory contents, such as variables and intermediate data being processed, CPU registers, which store the current state of the processor, including program counters and other key registers that reflect the progress of the workload's execution. Further, the snapshot may comprise active processes and threads within the TEE, which show what parts of the workload are currently running. The one or more snapshots may further comprise TEE-specific components, such as a secure memory region where sensitive data is stored, any ongoing I/O operations between the TEE and external systems, and/or any data stored in secure storage linked to the workload, such as cryptographic keys or sensitive configuration files. The snapshot may provide a complete, consistent image of the workload and the TEEs state at the moment of capture. The snapshots may be used for rollback or restoration, allowing the system to revert to this exact state if needed, as described below.

The one or more snapshots are captured based on one or more snapshot triggers. The snapshot triggers define an event or condition in response to which the snapshots are taken. A snapshot trigger can be any specific event. Once the snapshot trigger condition is met, the snapshot is captured. This allows for consistent, automated captures of the snapshots whenever the defined events or conditions occur, enabling precise monitoring and potential rollback or analysis. In some examples, the one or more snapshot triggers comprise at least one of the following: a predefined snapshot point in the workload, a maximum time interval between two consecutive snapshots, a predefined time interval, and a trigger defined by an external user. The predefined snapshot point in the workload defines that that a snapshot is captured when the workload reaches a specific stage or point in its execution. For example, a snapshot may be taken when the workload completes a critical function or a key process, ensuring that significant stages in the workload's lifecycle are preserved for analysis or rollback. The maximum time interval between two consecutive snapshots, ensures that a snapshot is captured within a certain amount of time after the previous one. This prevents long gaps between snapshots, even if no other conditions occur to trigger one. The predefined time interval trigger that captures snapshots at regular intervals, such as every 10 minutes during workload execution, ensuring that the system's state is consistently captured over time. The trigger defined by an external user allows manual control over when a snapshot is taken. An administrator or user may define specific conditions or manually initiate snapshots, providing flexibility and control over the snapshot process. In some examples, combinations of these snapshot triggers may be used to determine when a snapshot is taken, allowing for more flexible and precise capture points. In some examples, some of the one or more snapshots may be captured based on different triggers. Different snapshots within the workload's execution may be triggered by separate events, such as one by a time interval and another by a specific point in the workload's lifecycle.

The method performed by the more processing circuitries 130, when executing the introductions stored on the non-transitory computer-readable medium further comprises generating a second measurement of the workload while the workload is being executed in the trusted execution environment. The second measurement may be taken based on one or more a predefined measurement triggers. The one or more measurement triggers define an event or condition in response to which the second measurement is taken. The measurement trigger may be any specific event and once the measurement trigger condition is met, the second measurement is captured. The second measurement may be considered as an integrity check, that is taken during the execution of the workload to ensure that the running copy of the workload, such as the workload's binaries, matches the original, untampered version that was initially executed. The second measurement may also be provided to external services or certificate providers (see below).

The method further comprises verifying the generated second measurement. Verifying the second measurement involves checking the integrity of the workload during its execution. In some examples, verifying the second measurement may comprise comparing the second measurement to the first measurement. Comparing the first measurement and the second measurement may comprise comparing the two cryptographic hashes generated from the first measurement and the second measurement. By comparing these hashes, the system verifies whether the workload has remained unchanged. The verification process ensures that the workload remains unchanged and secure during execution. If the second measurement matches the first measurement, the verification is considered successful, confirming that the workload is operating as expected, without any tampering or modification. However, if the second measurement does not match the first measurement, the verification fails, signaling that the workload may have been altered, which could indicate unauthorized changes, corruption, or a potential security breach.

In some examples, the method further comprises repeatedly generating the second measurement based on one or more measurement triggers during the execution of the workload in the trusted execution environment. The second measurement may be repeated multiple times during its execution in the TEE to perform a series of integrity checks taken during the execution of the workload to ensure that the running copy of the workload matches the first measurement, which is the untampered version that was initially executed. The second measurements may be triggered based on one or more predefined measurement triggers. In some examples, the one or more measurement triggers comprise at least one of the following: a specific event during the workload execution, a trigger defined in the workload, a predefined time interval and a trigger defined by an external user. The specific event during the workload execution may refer to the completion of a critical function or the transitioning between stages, which may cause the second measurement to be taken. The trigger defined in the workload itself may initiate the second measurement at designated points, such as after processing specific data or reaching a particular state. The predefined time interval may trigger the second measurement at regular intervals, such as every few minutes, ensuring continuous verification of the workload's integrity during execution. The trigger defined by an external user allows an administrator or user to manually initiate a measurement, providing additional flexibility in when and how measurements are captured. In some examples, the measurement triggers may be used in combination to ensure comprehensive and flexible monitoring of the workload's integrity throughout its execution. In some examples, different second measurements may be triggered by different measurement triggers, allowing the system to adapt to various conditions and capture the workload's integrity at multiple key point

The method performed by the one or more processing circuitries 130, when executing the introductions stored on the non-transitory computer-readable medium further comprises triggering a verification failure action, if the verification of the second measurement fails. The verification failure action may be a predefined response triggered when the verification of the workload's integrity fails. This action is taken when a discrepancy is detected between the expected measurement (i.e., the first measurement) and the current measurement (the second measurement), indicating that the workload may have been tampered with, altered, or corrupted. In some examples, the method further comprises performing the triggered verification failure action.

In some examples, the verification failure action comprises at least one of the following: restore the execution of the workload to a previously captured snapshot, restore the execution of the workload to the latest captured snapshot, and control the TEE to stop the execution of the workload. Restoring the execution of the workload to a previously captured snapshot may comprise rolling back the workload to an earlier point in time before any potential tampering, corruption, or failure was detected. This option involves reverting the system to a known, trusted state captured by a prior snapshot, allowing the workload to resume from that point. By restoring a previous snapshot, the system may discard any untrusted changes that occurred after that snapshot. As described above, there may be a collection of one or more snapshots stored during the workload's execution, and from this collection, a snapshot may be selected for restoration, allowing flexibility in choosing the most appropriate snapshot to revert to depending on the situation.

Restoring the execution of the workload to the latest captured snapshot may comprise reverting the workload to the most recent snapshot taken before the failure was detected. This may minimize the loss of progress by allowing the workload to resume from the closest secure state, thus preserving as much of the workload's recent activity as possible while maintaining integrity. This may be a first option attempted since it restores the system to the most recent secure point. Controlling the TEE to stop the execution of the workload may comprise halting the workload entirely within the TEE, preventing further execution when an integrity failure or security breach is detected. This may ensure that no potentially compromised code or processes continue to run, protecting the system from further damage or unauthorized access. This option may be used when the system cannot reliably restore a trusted state, effectively freezing the environment to contain the issue.

In some examples, the method may further comprise restoring the execution of the workload to the latest captured snapshot. The method may further comprise verifying a measurement of the restored workload. The method may further comprise restoring the execution of the workload to a snapshot prior to the latest snapshot if the verification of the measurement of the restored workload fails. That is, if the verification of the second measurement fails, then the workload may be reverted to the most recent snapshot, which represents the closest secure state before the potential integrity failure or disruption. After restoring the workload, a second measurement of the restored workload is generated. This second measurement is then verified. If the verification of the measured restored workload is successful, the workload continues executing from the restored state. However, if the verification of the restored workload fails, meaning the restored snapshot does not match the expected integrity, the method comprises restoring the execution of the workload to a snapshot prior to the latest snapshot. This process may be repeated until a snapshot with verified integrity is found. As described above, there may be a collection snapshots stored during the workload's execution, and from this collection, the snapshots may be selected. This action ensures that the execution of the workload can consistently return to a secure, trusted state, preventing any compromised or tampered workloads from continuing to run.

The above-described technique enables maintaining the security and integrity of workloads running in the TEE. By combining multiple layers of integrity checking and system state preservation, this technique ensures comprehensive protection throughout the workload's lifecycle. The integration of measurements and snapshots allows not only to verify the workload's integrity but also to capture critical points in the TEE's state, providing flexibility for rollback and recovery. This layered approach offers continuous monitoring and robust recovery options, which are essential for dynamic and sensitive workloads running in secure environments. This technique improves the monitoring of the code running in a TEE, providing attestation beyond the initial loading and offering ongoing verification throughout execution. The combination of real-time measurements, snapshot-based state captures, and predefined failure actions ensures that potential security issues are detected early and addressed efficiently. The synergy between these features allows the system to adapt to different conditions, offering multiple avenues for maintaining a secure and trusted state. This continuous integrity checking and the ability to revert to known secure snapshots create a resilient and adaptable system that is well-suited for environments where maintaining trust and preventing unauthorized changes are important. By providing attestation beyond the initial loading, the system ensures that even during runtime, the workload's integrity remains verifiable and secure.

In some examples, the method performed by the one or more processing circuitries, when executing the instructions stored on the non-transitory computer-readable medium, further comprises generating a third measurement after loading the workload into the TEE and before executing the workload in the TEE. In other words, the third measurement may be taken once the workload has been transferred into the secure confines of the TEE but before it begins running. It captures the current state of the workload's code, binaries, and configuration. In some examples, the method further comprises verifying the third measurement. The method may further comprise executing the workload in the TEE if the third measurement is successfully verified. In some examples, verifying the third measurement comprises comparing the third measurement to the first measurement. The purpose of the third measurement is to ensure that the workload, in its loaded state in the TEE, has not been tampered with during the transfer process. Therefore, it is verified by comparing it to the untampered reference state established by the first measurement, taken prior to execution. This ensures that the workload remains in a secure and unmodified condition within the TEE before any execution occurs, adding an additional layer of security. In some examples, the method performed by the one or more processing circuitries, when executing the instructions stored on the non-transitory computer-readable medium, further comprises performing attestation of the TEE before executing the workload. The attestation of the TEE itself may refer to the process of verifying the integrity and security of the TEE before the workload is executed within it. This may comprise ensuring that the TEE has not been tampered with or compromised, and that it is functioning as expected. The attestation may comprise generating one or more cryptographic measurements that reflect the state of the TEE, including its different components, such as hardware components, firmware, and security configurations. The one or more measurements may be transmitted to an external verifier for proof, or it may be verified locally.

In some examples, the method performed by the one or more processing circuitries 130, when executing the instructions stored on the non-transitory computer-readable medium, further comprises performing attestation of the TEE before executing the workload. The attestation of the TEE itself refers to the process of verifying the integrity and security of the TEE before any workload is executed within it. This process comprises ensuring that the TEE has not been tampered with, compromised, or altered in any way, and that it is functioning as expected. The attestation may comprise generating one or more cryptographic measurements that reflect the current state of the TEE, including its hardware components, firmware, and security configurations. The one or more measurements may then be transmitted to an external verifier, which provides a trusted third-party validation of the TEE's integrity, or they may be verified locally within the system itself. The verification process may include comparing the current cryptographic measurements to the first measurement to ensure that the TEE remains in a secure condition. If the TEE is successfully verified and proven to be secure, the workload is allowed to be loaded into the TEE and executed. However, if the attestation fails, meaning there is a mismatch or compromise detected, the workload will not be executed, preventing the risk of running code in an untrusted or potentially compromised environment.

### Cooperation with External Systems

In some examples, the method performed by the one or more processing circuitries 130, when executing the instructions stored on the non-transitory computer-readable medium, may further comprise transmitting a positive integrity status to a workload identity authorization system, if the verification of the second measurement is successful. The method may further comprise receiving a certificate from the workload identity authorization system, proving the identity and integrity of the workload. The workload identity authorization system may refer to a system that assigns and verifies secure identities for workloads, ensuring that only trusted and verified workloads are permitted to access sensitive resources or interact with external services. Examples of workload identity authorization systems include Secure Production Identity Framework for Everyone (SPIFFE) and SPIFFE Runtime Environment (SPIRE), which provides cryptographic workload identities that ensure secure communication and access in distributed environments. The workload identity authorization system generates a cryptographic identity, such as a certificate, based on the verified integrity of the workload, which can then be used to authenticate the workload to other systems.

In some examples, the method further comprises transmitting the certificate to an external service. The external service may grant the workload access if the certificate is valid. That is, the certificate may be securely transmitted to external services, which rely on the workload identity authorization system to ensure the workload is trusted. For example, after receiving the certificate, the workload may present it to a cloud service or database to gain access. The external service verifies the certificate against the workload identity authorization system, and if the certificate is valid, access is granted. This integration enhances security by ensuring that only verified, trusted workloads can interact with external services, making sure that the workload's identity and integrity are always confirmed before granting access to sensitive resources

In some examples, the method performed by the one or more processing circuitries 130, when executing the instructions stored on the non-transitory computer-readable medium, may further comprise transmitting an integrity status to an authorization system. The authorization system may grant the workload access to an external service, if the verification of the second measurement is successful. An authorization system may refer to a security framework that controls access to resources or services based on the workload's identity and integrity. Once the workload's integrity is confirmed, the system may communicate this positive status to the authorization system, which then decides whether to grant or deny access to external services. This ensures that only verified, untampered workloads are permitted to access sensitive resources or interact with other systems. Examples of such authorization system include Microsoft Entra Conditional Access which may evaluate the integrity of the workload before granting access to databases, APIs, or cloud resources. In some examples, the authorization system may work by enforcing access policies based on the integrity status provided by the workload. For instance, in a cloud environment, after a workload successfully passes integrity verification, its positive integrity status may be transmitted to the authorization system, where access policies dictate which services or resources the workload is allowed to use. If the integrity verification fails, the authorization system prevents the workload from accessing critical resources, ensuring that compromised or tampered workloads cannot interact with external services. This integration enhances security by linking runtime integrity verification with access control, ensuring that access is granted only to workloads that meet strict security and integrity criteria

In some examples, the method performed by the one or more processing circuitries 130, when executing the instructions stored on the non-transitory computer-readable medium, may further comprise transmitting the second measurement to an external attestation service. The method may further comprise receiving an attestation report from the external attestation service. The attestation report may confirm the integrity of the workload and/or the TEE, if the verification of the second measurement is successful. An external attestation service may function as a third-party verifier that provides an additional layer of security by independently validating the integrity of the workload and/or the TEE. The second measurement contains cryptographic evidence or other data that reflects the current state of the workload and TEE. The external attestation service analyzes this data, comparing it against a trusted baseline (such as the first measurement) to independently validate that the workload and the TEE have not been tampered with and are functioning securely. This process may add an extra layer of assurance, as the attestation is validated by an entity outside of the local system. Examples of such attestation services include Intel^{®} Trust Authority, which can verify the state of Intel-based TEEs. After verifying the second measurement, the external attestation service may generate an attestation report, which is sent back to the TEE. This attestation report may confirm whether the workload and/or the TEE are operating in a secure and untampered state. If the verification is successful, the attestation report can serve as proof of integrity for other systems or external services that may require validation before granting access or allowing further interactions. For example, a financial institution might require such an attestation before allowing a workload to access sensitive data or services. By leveraging an external verifier, the system benefits from an additional, independent layer of security validation, ensuring that the integrity of the workload and TEE is trustworthy and verified by a third party.

### Implementation Example

In some examples, some or all of the steps of the method as described may be performed by a specific software component and/or hardware component. That is, in some examples, the non-transitory computer-readable medium 140 is storing instructions that, when executed by one or more processing circuitries 130, cause one or more different software and/or hardware components to carry out the method for attestation of a running workload in a trusted execution environment. A software component may refer to a program, agent, or service that performs a distinct task, such as generating measurements, verifying integrity, or managing checkpoints. These software components may run on the same apparatus, such as apparatus 100, or be distributed across different apparatuses. Communication between these software components often may be performed through mechanisms such as InterProcess Communication (IPC), shared memory, message passing, via APIs and/or dedicated software drivers. In some examples, the different components may may be distributed across different TEE enclaves. In this examples, the components may securely interact with each other while maintaining the isolation and protection provided by the TEEs. For example, communication between TEEs, whether they are running software or hardware-based processes, may happen through secure channels or hardware.

In some examples, the method performed by the one or more processing circuitries 130, when executing the instructions stored on the non-transitory computer-readable medium, may further comprise receiving a policy. The policy may comprise at least one of the following: one or more verification failure actions, the one or more snapshot triggers, and one or more measurement triggers. In some examples, the policy is pre-determined by a policy engine. The policy engine may be configured to trigger the verification failure action.

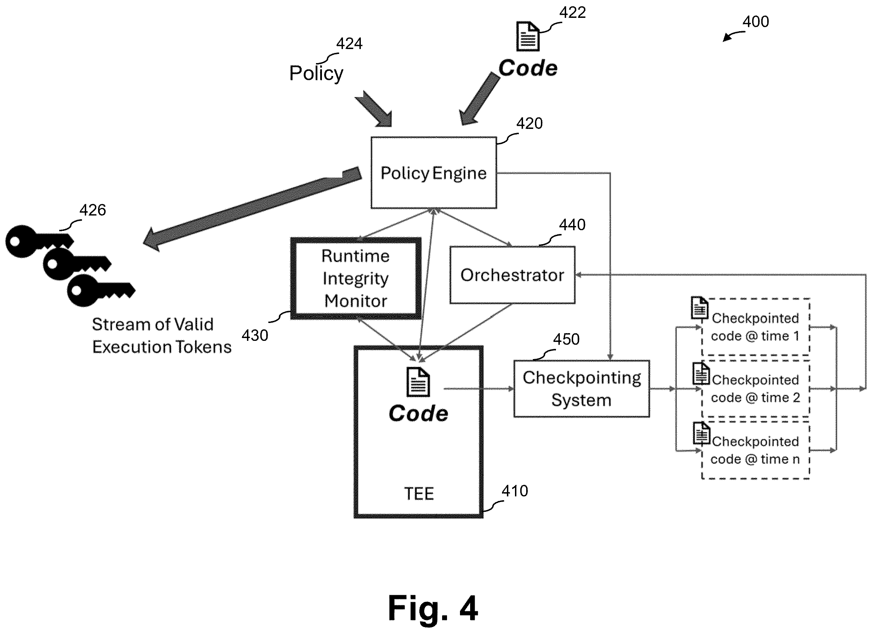

That is the policy engine may be responsible for defining and managing policies, which include the snapshot capturing, the verification failure actions, and/or the measurement triggers. The policy engine may dictate when snapshots are taken during workload execution based on events or time intervals, as well as trigger failure actions when the integrity of the workload is compromised. The policy engine may be a software component or an external hardware component. The policy engine may operate in the same TEE as the workload, in a separate TEE on the same host, or on an external device. Regardless of its location, the policy engine may communicate securely with the other components to control critical actions and ensure that the system remains secure (see also Fig. 4 below).

In some examples, the verification failure action may be performed by an orchestrator, which may be triggered by the policy engine. The orchestrator may be responsible for managing the execution of the workload and performing any verification failure actions as triggered and dictated by the policy engine. If the policy engine triggers a verification failure action - such as halting the workload or restoring the system to a previously captured snapshot - the orchestrator may be the component that executes these actions. The policy engine may be a software component. The orchestrator may run in the same TEE as the workload, in a separate TEE on the same host, or on an external device, securely interacting with the policy engine and a runtime integrity monitor to ensure that all policies and actions are executed safely and efficiently (see also Fig. 4 below).

For example, the generating the second measurement of the workload and/or verifying the second measurement may be performed by a runtime integrity monitor. The runtime integrity monitor may be responsible for continuously monitoring the workload during its execution within the TEE and generating and verifying the second measurements. If the runtime integrity monitor detects any integrity issues, it reports them to the policy engine, which can trigger appropriate actions performed by the orchestrator. The runtime integrity monitor may run in the same TEE as the workload, in a different TEE on the same host, or on an external device, communicating securely with the PE and the Orchestrator (see also Fig. 4 below). In some examples, the generating of the second measurement of the workload and/or verifying the second measurement may comprise at least one of the following components (that is for example, the runtime integrity monitor may be implemented by at least one of the following components): a micro-agent embedded in the workload, an external trusted entity running in a second trusted execution environment with access to monitor the trusted execution environment, an Extended Berkeley Packet Filter, eBPF, tool operating at the system level of the operating system hosting the trusted execution environment, a trusted virtual machine on the same node as the trusted execution environment, or an application running inside a trusted execution environment controller, configured to monitor and control the trusted execution environment. That is:
A micro-agent embedded in the workload may operate as a small, lightweight piece of code integrated directly within the workload's executable. This micro-agent continuously monitors the workload's behavior by tracking specific runtime parameters, such as memory usage, data flow, and the integrity of the code segments during execution. Because it resides within the workload, the micro-agent can access internal states and verify the consistency of code and data as they evolve, ensuring that no unauthorized modifications occur. The micro-agent may be designed to be lightweight to minimize overhead, and because it runs inside the workload, it has the advantage of real-time monitoring without requiring external systems. This close integration allows the agent to perform dynamic integrity checks at key points during execution, providing immediate responses to any anomalies while maintaining a low latency in detecting tampering or security violations. Additionally, because it operates within the workload, the micro-agent doesn't need to rely on external communication, reducing the risk of exposure to outside threats.

The external trusted entity running in a second TEE operates independently from the primary TEE that is executing the workload. The second TEE is configured to securely access and monitor the first TEE, ensuring that the workload running in the primary TEE remains unaltered and secure. The external trusted entity typically monitors integrity by remotely checking the cryptographic measurements or attestation data of the primary TEE. The second TEE offers strong isolation while maintaining the ability to observe the internal state of the primary TEE through secure channels. This setup ensures that any integrity violations in the first TEE are detected and reported without exposing sensitive operations to the outside world. This method is effective because the monitoring occurs in a separate secure environment, reducing the risk of attacks on the workload and ensuring trusted, remote validation.

The Extended Berkeley Packet Filter (eBPF) tool operates at the kernel level of the operating system that hosts the TEE, allowing it to monitor the system's behavior and the workload in a non-intrusive manner. eBPF is a highly flexible technology that allows custom programs to run in the OS kernel without requiring modifications to kernel code. The eBPF tool can be programmed to capture real-time telemetry from the TEE by tracking specific system calls, network traffic, or memory access patterns that are crucial to the integrity of the workload. This monitoring happens at the system level, so the eBPF tool does not directly interfere with the workload's execution. It can observe and log suspicious activity, such as unexpected changes in workload behavior or deviations from expected data flow, providing insight into potential integrity violations without modifying the workload itself. eBPF's lightweight nature ensures minimal performance overhead while maintaining deep visibility into system-level operations related to the TEE.

The trusted virtual machine (VM) running on the same physical node as the TEE monitors the integrity of the workload from outside the TEE. The VM operates in an isolated environment but shares the same underlying hardware as the TEE, allowing it to interact securely with the TEE. The trusted VM can receive measurement data or attestation reports from the TEE through secure channels and verify that the workload's integrity has not been compromised. Since the VM operates separately from the TEE, it provides an additional layer of security by performing external validation while maintaining isolation. The trusted VM may perform periodic checks of the workload's state, including verifying cryptographic hashes of code and configurations or ensuring that the TEE's environment remains consistent with the trusted baseline. This setup ensures robust security without needing to interfere with the workload's execution inside the TEE.

The application running inside the TEE controller is responsible for managing and monitoring the overall state of the TEE. The TEE controller has access to low-level system functions and can interact with the TEE's internal mechanisms to oversee the workload's execution. The application in the controller is typically configured to monitor the state of the TEE by checking the cryptographic integrity of the workload, managing snapshots, and handling any exceptions or violations. It can directly control the TEE by triggering actions such as halting the workload or rolling back to a previous snapshot if any integrity violations are detected. The TEE controller is highly trusted because it manages the overall operations and security policies within the TEE, ensuring that both the workload and the TEE environment remain secure throughout execution. This method allows centralized control over the TEE, ensuring that integrity checks are tightly integrated with the TEE's security policies.

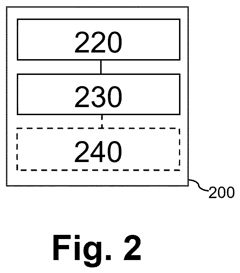

Further details and aspects are mentioned in connection with the examples described below. The example shown in Fig. 1 may include one or more optional additional features corresponding to one or more aspects mentioned in connection with the proposed concept or one or more examples described below (e.g., Figs. 2 - 4).

**Fig. 2** illustrates a block diagram of an example of an apparatus 200 or device 200. The apparatus 200 comprises circuitry that is configured to provide the functionality of the apparatus 200. For example, the apparatus 200 of Fig. 2 comprises interface circuitry 220, processing circuitry 230 and (optional) storage circuitry 240. For example, the processing circuitry 230 may be coupled with the interface circuitry 220 and optionally with the storage circuitry 240.

For example, the processing circuitry 230 may be configured to provide the functionality of the apparatus 200, in conjunction with the interface circuitry 220. For example, the interface circuitry 220 is configured to exchange information, e.g., with other components inside or outside the apparatus 200 and the storage circuitry 240. Likewise, the device 200 may comprise means that is/are configured to provide the functionality of the device 200.

The components of the device 200 are defined as component means, which may correspond to, or implemented by, the respective structural components of the apparatus 200. For example, the device 200 of Fig. 2 comprises means for processing 230, which may correspond to or be implemented by the processing circuitry 230, means for communicating 220, which may correspond to or be implemented by the interface circuitry 220, and (optional) means for storing information 240, which may correspond to or be implemented by the storage circuitry 240. In the following, the functionality of the device 200 is illustrated with respect to the apparatus 200. Features described in connection with the apparatus 200 may thus likewise be applied to the corresponding device 200.

In general, the functionality of the processing circuitry 230 or means for processing 230 may be implemented by the processing circuitry 230 or means for processing 230 executing machine-readable instructions. Accordingly, any feature ascribed to the processing circuitry 230 or means for processing 230 may be defined by one or more instructions of a plurality of machine-readable instructions. The apparatus 200 or device 200 may comprise the machine-readable instructions, e.g., within the storage circuitry 240 or means for storing information 240.

The interface circuitry 220 or means for communicating 220 may correspond to one or more inputs and/or outputs for receiving and/or transmitting information, which may be in digital (bit) values according to a specified code, within a module, between modules or between modules of different entities. For example, the interface circuitry 220 or means for communicating 220 may comprise circuitry configured to receive and/or transmit information.

For example, the processing circuitry 230 or means for processing 230may be implemented using one or more processing units, one or more processing devices, any means for processing, such as a processor, a computer or a programmable hardware component being operable with accordingly adapted software. In other words, the described function of the processing circuitry 230 or means for processing 230 may as well be implemented in software, which is then executed on one or more programmable hardware components. Such hardware components may comprise a general-purpose processor, a Digital Signal Processor (DSP), a micro-controller, etc.

For example, the storage circuitry 240 may comprise one or more components of the non-transitory computer-readable medium 140. For example, the storage circuitry 240 may store instructions that, when executed by the processing circuitry 230, may cause the processing circuitry to perform the method for attestation of a running workload in a trusted execution environment as described above. The storage circuitry 240 or means for storing information 240 may comprise at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage.

The processing circuitry 230 is configured to generate a first measurement of a workload. The processing circuitry 230 is further configured to capture one or more snapshots of a trusted execution environment executing the workload. The one or more snapshots are captured based on one or more snapshot triggers. The processing circuitry 230 is further configured to generate a second measurement of the workload while the workload is being executed in the trusted execution environment. The processing circuitry 230 is further configured to verify the generated second measurement. The processing circuitry 230 is further configured to trigger a verification failure action, if the verification of the second measurement fails.

Further details and aspects are mentioned in connection with the examples described above or below. The example shown in Fig. 2 may include one or more optional additional features corresponding to one or more aspects mentioned in connection with the proposed concept or one or more examples described above (e.g., Fig. 1) or below (e.g., Figs. 2 - 4).

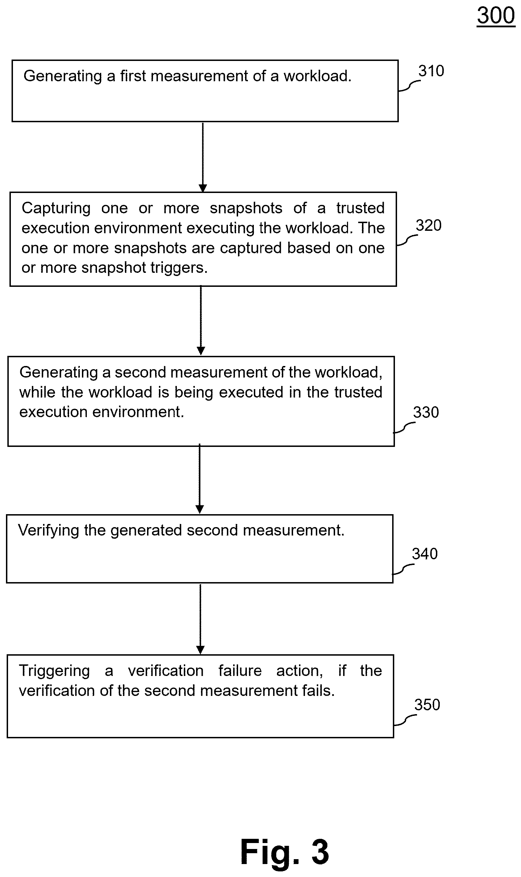

**Fig. 3** illustrates a flowchart of an example of a method 300. The method 300 may be performed by an apparatus as described herein, such as apparatus 200. The method 300 may performed by the apparatus (for example the one or more processing circuitries 130), when executing the instructions stored on the non-transitory computer-readable medium described herein, such as the non-transitory computer-readable 140. The method 300 comprises 310 generating a first measurement of a workload. The method 300 further comprises 320 capturing one or more snapshots of a trusted execution environment executing the workload. The one or more snapshots are captured based on one or more snapshot triggers. The method 300 further comprises 330 generating a second measurement of the workload while the workload is being executed in the trusted execution environment. The method 300 further comprises 340 verifying the generated second measurement. The method 300 further comprises 350 triggering a verification failure action, if the verification of the second measurement fails.

More details and aspects of the method 200 are explained in connection with the proposed technique or one or more examples described above (e.g., with reference to Fig. 1), or below. The method 200 may comprise one or more additional optional features corresponding to one or more aspects of the proposed technique, or one or more examples described above (e.g., Figs. 1 - 2) or below (e.g., Fig. 4).

### Further Examples

**Fig. 4** illustrates an example of a block diagram of a system 400 for near-continuous attestation and management of a running workload (also referred to as code) in a TEE as described herein. The system 400 comprises the following components: The TEE 410, a policy engine 420, a runtime integrity monitor 430, an orchestrator 440 and a checkpointing system 450. In some examples, some or all of the components may be implemented as software components. In some examples, some or all of the components may be implemented as hardware components. In some examples, the components may all be implemented on the same host and/or in the TEE 410. In some examples, some or all of the components may be implemented in separate TEEs and/or on separate hosts. As also described above, the endpoint runtime code integrity monitor 430 may be implemented based on at least one of the following models: a micro agents included in the workload; an external trustlet, for example running in a separate partition/virtual machine with permissions to look at the workload-protected memory space; an eBPF; processor tracing; a trusted VM on the same node; and/or workload running inside the TEE controllers. The checkpointing system 450 may be part of the policy engine 410 or may be controlled by the policy engine 410. The checkpointing system 450 may have a capability to capture the virtual machine snapshots/checkpoints. This may be similar to snapshot techniques that are utilized in virtual environments. The checkpointing system 450 may provide and/or mange a storage environment for the captured snapshots, that is the checkpointed workload and state. The policy engine 420 may receive a policy 424 and enforce the policy involved in actions resulting from a determined runtime integrity failure. The policy may comprise: 1. Workload integrity rules, such as checksums, checkpoint times etc. 2. Snapshots triggers, such as time-based triggers, event-based triggers (e.g., opening a new socket), or other triggers for checks (e.g. every 5 minutes). 3. Verification failure actions such as fallback to a checkpoint, stopping the workload etc. The policy engine 420 may further receive the workload 422. The workload 422 may specify certain checkpoints during execution where integrity validation may be performed. Further, administrators may set up checkpoints based on conditions like time intervals or other triggers. The checkpoints may be policy statements that are fed into the policy engine, which controls when and how the validation is triggered during the workload's execution. The orchestrator 440 may be able to roll back the system to a prior checkpoint. The orchestrator 440 may further drive multiple re-attempts from a known good state and eventually trace back an entire transaction and/or reset the entire transaction as required by the policy engine 420.

The system 400 may for example operate in the following way: First, the workload 422 may be checked to run in TEE 410 in a measurement may be taken (for example the first measurement as described above). Second, the orchestrator 440 may launch the workload inside the TEE 410 and take a measurement (for example, the first or third measurement as described above) for attestation of the workload 's launch state (e.g., workload hashes) and node attestation (e.g., validating that it is running in TDX, checking versions, and other parameters). Third, the policy engine 420 is primed to receive the policy 424. The policy may be applied through the orchestrator 440. Fourth, the runtime integrity monitor 430 is started when the workload launches, using any of the methods as described above. Fifth, a set of snapshot triggers for snapshots (checkpoints) is defined in the policy 424 and sent to the policy engine, along with verification failure actions to take if there is a runtime integrity failure. Sixth, during execution snapshots (checkpoints) are taken based on one or more of the following triggers: 1. Workload is triggering a checkpoint; 2. A maximum time from last checkpoint is passed; 3. Other triggers define by an administrator. Seventh, the workload runtime attestation checks are performed by the runtime integrity monitor, for example periodically and/or done or based on specific measurement triggers. Eighth, on runtime verification failure the execution of the workload is halted pending decision by the policy engine, with the following actions possible: 1. A rollback to last checkpoint; 2. A rollback to a prior checkpoint (e.g. rollback to last checkpoint already tried and integrity failed again); 3. A complete stop/reset of the workload/transaction that is executed.

Further, the during operation, the policy engine 420 may periodically send execution tokens 426 to parties that have requested attestation of the running workload. The system 400 may further, cooperate with external systems like a workload identity authorization system, an authorization system and an external attestation service as described above. For example, the system 400 may be integrated into or being part of part of or through services like Intel^{®} Trust authority, coarse-grained authorization systems like Microsoft conditional access, and workload identity authorization systems like SPIFFE/SPIRE.

Further details and aspects are mentioned in connection with the examples described above. The example shown in Fig. 4 may include one or more optional additional features corresponding to one or more aspects mentioned in connection with the proposed concept or one or more examples described above (e.g., Figs. 1 to 3).

In the following, some examples of the proposed technique are presented:
An example (e.g., example 1) relates to a non-transitory computer-readable medium storing instructions that, when executed by one or more processing circuitries, causing the one or more processing circuitries to perform a method for attestation of a running workload in a trusted execution environment comprising generating a first measurement of a workload, capturing one or more snapshots of a trusted execution environment executing the workload, wherein the one or more snapshots are captured based on one or more snapshot triggers, generating a second measurement of the workload while the workload is being executed in the trusted execution environment, verifying the generated second measurement, and triggering a verification failure action, if the verification of the second measurement fails.

Another example (e.g., example 2) relates to a previous example (e.g., example 1) or to any other example, further comprising that the verification failure action comprises at least one of the following restore the execution of the workload to a previously captured snapshot, restore the execution of the workload to the latest captured snapshot and control the trusted execution environment to stop the execution of the workload.

Another example (e.g., example 3) relates to a previous example (e.g., example 2) or to any other example, further comprising that the method further comprises performing the verification failure action.

Another example (e.g., example 4) relates to a previous example (e.g., one of the examples 2 to 3) or to any other example, further comprising that the method further comprises restoring the execution of the workload to the latest captured snapshot, verifying a measurement of the restored workload, and restoring the execution of the workload to snapshot prior to the latest snapshot if the verification of the measurement of the restored workload fails.

Another example (e.g., example 5) relates to a previous example (e.g., one of the examples 1 to 4) or to any other example, further comprising that the method further comprises repeatedly generating the second measurement based on one or more measurement triggers during the execution of the workload in the trusted execution environment.

Another example (e.g., example 6) relates to a previous example (e.g., example 5) or to any other example, further comprising that the one or more measurement triggers comprise at least one of the following a specific event during the workload execution, a trigger defined in the workload, a predefined time interval and a trigger defined by an external user.

Another example (e.g., example 7) relates to a previous example (e.g., one of the examples 1 to 6) or to any other example, further comprising that verifying the second measurement comprises comparing the second measurement to the first measurement.

Another example (e.g., example 8) relates to a previous example (e.g., one of the examples 1 to 7) or to any other example, further comprising generating a third measurement after loading the workload into the trusted execution environment and before executing the workload in the trusted execution environment.

Another example (e.g., example 9) relates to a previous example (e.g., example 8) or to any other example, further comprising that the method further comprises verifying the third measurement, and executing the workload in the trusted execution environment if the third measurement is successfully verified.

Another example (e.g., example 10) relates to a previous example (e.g., example 9) or to any other example, further comprising that verifying the third measurement comprises comparing third measurement to the first measurement.

Another example (e.g., example 11) relates to a previous example (e.g., one of the examples 1 to 10) or to any other example, further comprising that the method further comprises transmitting a positive integrity status to a workload identity authorization system, if the verification of the second measurement is successful, receiving a certificate from the workload identity authorization system, proving the identity and integrity of the workload.

Another example (e.g., example 12) relates to a previous example (e.g., example 11) or to any other example, further comprising that the method further comprises transmitting the certificate to an external service, wherein the external service grants the workload access if the certificate is valid.

Another example (e.g., example 13) relates to a previous example (e.g., one of the examples 1 to 12) or to any other example, further comprising that the method further comprises transmitting an integrity status to an authorization system wherein the authorization system grants the workload access to an external service, if the verification of the second measurement is successful.

Another example (e.g., example 14) relates to a previous example (e.g., one of the examples 1 to 13) or to any other example, further comprising that the method further comprises transmitting the second measurement to an external attestation service, receiving an attestation report from the external attestation service, the attestation report confirming the integrity of the workload and/or the trusted execution environment, if the verification of the second measurement is successful.

Another example (e.g., example 15) relates to a previous example (e.g., one of the examples 1 to 14) or to any other example, further comprising receiving a policy, the policy comprising at least one of the following one or more verification failure actions, the one or more snapshot triggers, and one or more measurement triggers.

Another example (e.g., example 16) relates to a previous example (e.g., example 15) or to any other example, further comprising that the policy is pre-determined by a policy engine, wherein the policy engine is configured to trigger the verification failure action.

Another example (e.g., example 17) relates to a previous example (e.g., example 16) or to any other example, further comprising that the verification failure action is performed by an orchestrator, which is triggered by the policy engine.

Another example (e.g., example 18) relates to a previous example (e.g., one of the examples 1 to 17) or to any other example, further comprising that generating the second measurement of the workload and/or verifying the second measurement comprises at least one of the following components a micro-agent embedded in the workload, an external trusted entity running in a second trusted execution environment with access to monitor the trusted execution environment, an Extended Berkeley Packet Filter, eBPF, tool operating at the system level of the operating system hosting the trusted execution environment, a trusted virtual machine on the same node as the trusted execution environment, or an application running inside a trusted execution environment controller, configured to monitor and control the trusted execution environment.

Another example (e.g., example 19) relates to a previous example (e.g., one of the examples 1 to 18) or to any other example, further comprising that the method further comprises initiating the trusted execution environment.

Another example (e.g., example 20) relates to a previous example (e.g., one of the examples 1 to 19) or to any other example, further comprising that the method further comprises performing attestation of the trusted execution environment before executing the workload.

Another example (e.g., example 21) relates to a previous example (e.g., one of the examples 1 to 20) or to any other example, further comprising that the trusted execution environment is a TDX trusted domain or a SGX enclave.

Another example (e.g., example 22) relates to a previous example (e.g., one of the examples 1 to 21) or to any other example, further comprising that the one or more snapshot triggers comprise at least one of the following a predefined snapshot point in the workload, a maximum time interval between two consecutive snapshots, a predefined time interval, and a trigger defined by an external user.

Another example (e.g., example 23) relates to a previous example (e.g., one of the examples 1 to 22) or to any other example, further comprising that each of the one or more snapshots comprises at least the workload and the current execution state of the workload within the trusted execution environment.

An example (e.g., example 24) relates to an apparatus for attestation of a running workload in a trusted execution environment comprising interface circuitry, machine-readable instructions and processing circuitry to execute the machine-readable instructions to generate a first measurement of a workload, capture one or more snapshots of a trusted execution environment executing the workload, wherein the one or more snapshots are captured based on one or more snapshot triggers, generate a second measurement of the workload while the workload is being executed in the trusted execution environment, verify the generated second measurement, and trigger a verification failure action, if the verification of the second measurement fails.

Another example (e.g., example 25) relates to a previous example (e.g., example 24) or to any other example, further comprising that the verification failure action comprises at least one of the following restore the execution of the workload to a previously captured snapshot, restore the execution of the workload to the latest captured snapshot and control the trusted execution environment to stop the execution of the workload.

Another example (e.g., example 26) relates to a previous example (e.g., example 25) or to any other example, further comprising that the processing circuitry is further to execute the machine-readable instructions to perform the verification failure action.

Another example (e.g., example 27) relates to a previous example (e.g., one of the examples 25 to 26) or to any other example, further comprising that the processing circuitry is further to execute the machine-readable instructions to restore the execution of the workload to the latest captured snapshot, verify a measurement of the restored workload, and restore the execution of the workload to snapshot prior to the latest snapshot if the verification of the measurement of the restored workload fails.

Another example (e.g., example 28) relates to a previous example (e.g., one of the examples 24 to 27) or to any other example, further comprising that the processing circuitry is further to execute the machine-readable instructions to repeatedly generate the second measurement based on one or more measurement triggers during the execution of the workload in the trusted execution environment.

Another example (e.g., example 29) relates to a previous example (e.g., example 28) or to any other example, further comprising that the one or more measurement triggers comprise at least one of the following a specific event during the workload execution, a trigger defined in the workload, a predefined time interval and a trigger defined by an external user.

Another example (e.g., example 30) relates to a previous example (e.g., one of the examples 24 to 29) or to any other example, further comprising that verifying the second measurement comprises comparing the second measurement to the first measurement.

Another example (e.g., example 31) relates to a previous example (e.g., one of the examples 24 to 30) or to any other example, further comprising that the processing circuitry is further to execute the machine-readable instructions to generate a third measurement after loading the workload into the trusted execution environment and before executing the workload in the trusted execution environment.

Another example (e.g., example 32) relates to a previous example (e.g., one of the examples 24 to 31) or to any other example, further comprising that the processing circuitry is further to execute the machine-readable instructions to verify the third measurement, and execute the workload in the trusted execution environment if the third measurement is successfully verified.

Another example (e.g., example 33) relates to a previous example (e.g., example 32) or to any other example, further comprising that verifying the third measurement comprises comparing third measurement to the first measurement.

Another example (e.g., example 34) relates to a previous example (e.g., one of the examples 24 to 33) or to any other example, further comprising that the processing circuitry is further to execute the machine-readable instructions to transmit a positive integrity status to a workload identity authorization system, if the verification of the second measurement is successful, receive a certificate from the workload identity authorization system, proving the identity and integrity of the workload.

Another example (e.g., example 35) relates to a previous example (e.g., example 34) or to any other example, further comprising that the processing circuitry is further to execute the machine-readable instructions to transmit the certificate to an external service, wherein the external service grants the workload access if the certificate is valid.

Another example (e.g., example 36) relates to a previous example (e.g., one of the examples 24 to 35) or to any other example, further comprising that the processing circuitry is further to execute the machine-readable instructions to transmit an integrity status to an authorization system wherein the authorization system grants the workload access to an external service, if the verification of the second measurement is successful.

Another example (e.g., example 37) relates to a previous example (e.g., one of the examples 24 to 36) or to any other example, further comprising that the processing circuitry is further to execute the machine-readable instructions to transmit the second measurement to an external attestation service, receive an attestation report from the external attestation service, the attestation report confirming the integrity of the workload and/or the trusted execution environment, if the verification of the second measurement is successful.

Another example (e.g., example 38) relates to a previous example (e.g., one of the examples 24 to 37) or to any other example, further comprising that the processing circuitry is further to execute the machine-readable instructions to receive a policy, the policy comprising at least one of the following one or more verification failure actions, the one or more snapshot triggers, and one or more measurement triggers.

Another example (e.g., example 39) relates to a previous example (e.g., example 38) or to any other example, further comprising that the policy is pre-determined by a policy engine, wherein the policy engine is configured to trigger the verification failure action.

Another example (e.g., example 40) relates to a previous example (e.g., example 39) or to any other example, further comprising that the verification failure action is performed by an orchestrator, which is triggered by the policy engine.

Another example (e.g., example 41) relates to a previous example (e.g., one of the examples 24 to 40) or to any other example, further comprising that generating the second measurement of the workload and/or verifying the second measurement comprises at least one of the following components a micro-agent embedded in the workload, an external trusted entity running in a second trusted execution environment with access to monitor the trusted execution environment, an Extended Berkeley Packet Filter, eBPF, tool operating at the system level of the operating system hosting the trusted execution environment, a trusted virtual machine on the same node as the trusted execution environment, or an application running inside a trusted execution environment controller, configured to monitor and control the trusted execution environment.

Another example (e.g., example 42) relates to a previous example (e.g., one of the examples 24 to 41) or to any other example, further comprising that the processing circuitry is further to execute the machine-readable instructions to initiate the trusted execution environment.

Another example (e.g., example 43) relates to a previous example (e.g., one of the examples 24 to 42) or to any other example, further comprising that the processing circuitry is further to execute the machine-readable instructions to perform attestation of the trusted execution environment before executing the workload.

Another example (e.g., example 44) relates to a previous example (e.g., one of the examples 24 to 43) or to any other example, further comprising that the trusted execution environment is a TDX trusted domain or a SGX enclave.

Another example (e.g., example 45) relates to a previous example (e.g., one of the examples 24 to 44) or to any other example, further comprising that the one or more snapshot triggers comprise at least one of the following a predefined snapshot point in the workload, a maximum time interval between two consecutive snapshots, a predefined time interval, and a trigger defined by an external user.

Another example (e.g., example 46) relates to a previous example (e.g., one of the examples 24 to 45) or to any other example, further comprising that each of the one or more snapshots comprises at least the workload and the current execution state of the workload within the trusted execution environment

An example (e.g., example 47) relates to a method for attestation of a running workload in a trusted execution environment comprising generating a first measurement of a workload, capturing one or more snapshots of a trusted execution environment executing the workload, wherein the one or more snapshots are captured based on one or more snapshot triggers, generating a second measurement of the workload while the workload is being executed in the trusted execution environment, verifying the generated second measurement, and triggering a verification failure action, if the verification of the second measurement fails.

An example (e.g., example 48) relates to a device comprising means for processing for generating a first measurement of a workload, capturing one or more snapshots of a trusted execution environment executing the workload, wherein the one or more snapshots are captured based on one or more snapshot triggers, generating a second measurement of the workload while the workload is being executed in the trusted execution environment, verifying the generated second measurement, and triggering a verification failure action, if the verification of the second measurement fails.

Another example (e.g., example 49) relates to a computer program having a program code for performing the method of example 47 when the computer program is executed on a computer, a processor, or a programmable hardware component.

An example (e.g., example 50) relates to an apparatus comprising a processor circuitry configured to generate a first measurement of a workload, capture one or more snapshots of a trusted execution environment executing the workload, wherein the one or more snapshots are captured based on one or more snapshot triggers, generate a second measurement of the workload while the workload is being executed in the trusted execution environment, verify the generated second measurement, and trigger a verification failure action, if the verification of the second measurement fails.

Another example (e.g., example 51) relates to machine-readable storage including machine readable instructions, when executed, to implement a method or realize an apparatus as claimed in any pending example.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product. Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g., via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect or feature or combination thereof, nor do the disclosed examples require that any one or more specific advantages be present or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. A non-transitory computer-readable medium storing instructions that, when executed by one or more processing circuitries, causing the one or more processing circuitries to perform a method for attestation of a running workload in a trusted execution environment comprising:
generating a first measurement of a workload;
capturing one or more snapshots of a trusted execution environment executing the workload, wherein the one or more snapshots are captured based on one or more snapshot triggers;
generating a second measurement of the workload while the workload is being executed in the trusted execution environment;
verifying the generated second measurement; and
triggering a verification failure action, if the verification of the second measurement fails.

2. The non-transitory computer-readable medium of claim 1, wherein the verification failure action comprises at least one of the following: restore the execution of the workload to a previously captured snapshot, restore the execution of the workload to the latest captured snapshot and control the trusted execution environment to stop the execution of the workload.

3. The non-transitory computer-readable medium of claim 2, wherein the method further comprises performing the verification failure action.

4. The non-transitory computer-readable medium of any one of claims 2 to 3, wherein the method further comprises restoring the execution of the workload to the latest captured snapshot;
verifying a measurement of the restored workload; and
restoring the execution of the workload to snapshot prior to the latest snapshot if the verification of the measurement of the restored workload fails.

5. The non-transitory computer-readable medium of any one of claims 1 to 4, wherein the method further comprises repeatedly generating the second measurement based on one or more measurement triggers during the execution of the workload in the trusted execution environment.

6. The non-transitory computer-readable medium of claim 5, wherein the one or more measurement triggers comprise at least one of the following: a specific event during the workload execution, a trigger defined in the workload, a predefined time interval and a trigger defined by an external user.

7. The non-transitory computer-readable medium of any one of claims 1 to 6, wherein verifying the second measurement comprises comparing the second measurement to the first measurement.

8. The non-transitory computer-readable medium of any one of claims 1 to 7, further comprising generating a third measurement after loading the workload into the trusted execution environment and before executing the workload in the trusted execution environment.

9. The non-transitory computer-readable medium of claim 8, wherein the method further comprises verifying the third measurement; and
executing the workload in the trusted execution environment if the third measurement is successfully verified.

10. The non-transitory computer-readable medium of claim 9, wherein verifying the third measurement comprises comparing third measurement to the first measurement.

11. The non-transitory computer-readable medium of any one of claims 1 to 10, wherein the method further comprises:
transmitting a positive integrity status to a workload identity authorization system, if the verification of the second measurement is successful;
receiving a certificate from the workload identity authorization system, proving the identity and integrity of the workload.

12. The non-transitory computer-readable medium of claim 11, wherein the method further comprises transmitting the certificate to an external service, wherein the external service grants the workload access if the certificate is valid.

13. The non-transitory computer-readable medium of any one of claims 1 to 12, wherein the method further comprises transmitting an integrity status to an authorization system wherein the authorization system grants the workload access to an external service, if the verification of the second measurement is successful.

14. An apparatus for attestation of a running workload in a trusted execution environment comprising processing circuitry configured to:
generate a first measurement of a workload;
capture one or more snapshots of a trusted execution environment executing the workload, wherein the one or more snapshots are captured based on one or more snapshot triggers;
generate a second measurement of the workload while the workload is being executed in the trusted execution environment;
verify the generated second measurement; and
trigger a verification failure action, if the verification of the second measurement fails.

15. A method for attestation of a running workload in a trusted execution environment comprising:
generating a first measurement of a workload;
capturing one or more snapshots of a trusted execution environment executing the workload, wherein the one or more snapshots are captured based on one or more snapshot triggers;
generating a second measurement of the workload while the workload is being executed in the trusted execution environment;
verifying the generated second measurement; and
triggering a verification failure action, if the verification of the second measurement fails.
